# EUROPÄISCHE PATENTSCHRIFT

(11) **EP 2 684 782 B1**
(45) Veröffentlichungstag und Bekanntmachung des Hinweises auf die Patenterteilung: **10.05.2017**
(21) Anmeldenummer: 13175545.6
(22) Anmeldetag: 08.07.2013
(51) Int. Cl.: B62D 33/04, B62D 33/027, B62D 33/033, B60J 5/06

(54) **Aufbau zum Befördern von Gütern**
Assembly for conveying goods
Structure pour le transports de biens

(30) Priorität: 11.07.2012 DE 102012212132
(43) Veröffentlichungstag der Anmeldung: 15.01.2014
(73) Patentinhaber: Fahrzeugbau Heinz Böse GmbH, 59889 Eslohe-Reiste (DE)
(72) Erfinder: Böse, Maximilian, 59889 Eslohe-Reiste (DE)
(74) Vertreter: Linnemann, Winfried

(56) Entgegenhaltungen:
- EP-A2- 2 218 600
- EP-A2- 2 676 824
- WO-A2-2004/067316
- GB-A- 1 218 235
- JP-U- S61 101 028
- US-A- 1 405 485

## Beschreibung

Die Erfindung betrifft einen Aufbau zum Befördern von Gütern, insbesondere für einen Lastkraftwagen, einen Anhänger, einen Absetzcontainer, eine Wechselbrücke, einen Sattelauflieger oder dergleichen, aufweisend wenigstens eine seitliche Verladeöffnung und eine faltbare Seitenwand, wobei die faltbare Seitenwand zumindest an einer im oberen Bereich der seitlichen Verladeöffnung angeordneten oberen Schiene zwischen einer vollständig entfalteten Stellung und einer vollständig gefalteten Stellung bewegbar gelagert ist.

Ein entsprechender Aufbau ist beispielsweise aus der Patentschrift US 5 215 349 A oder aus der JP S61101028U bekannt. Bei herkömmlichen Aufbauten zum Befördern von Gütern der vorgenannten Art besteht das Problem, dass die faltbare Seitenwand in ihrer vollständig gefalteten Stellung einen Teil der Verladeöffnung bedeckt und somit nicht die gesamte Verladeöffnung zum Be- beziehungsweise Entladen von Gütern zugänglich ist. Es ist bei den herkömmlichen Aufbauten daher erforderlich, die in ihrer vollständig gefalteten Stellung befindliche faltbare Seitenwand während eines Verladevorgangs relativ zur Verladeöffnung an unterschiedlichen Stellen zu positionieren. Hierdurch wird die Handhabung der herkömmlichen Aufbauten umständlich, wodurch zudem der Zeitaufwand für einen Verladevorgang nachteilig erhöht wird.

Um diese Problematik zu umgehen, muss die in ihrer vollständig gefalteten Stellung befindliche faltbare Seitenwand vollständig aus dem Bereich der Verladeöffnung entfernbar sein. Dieser Lösungsansatz ist beispielsweise aus der Gebrauchsmusterschrift DE 20 2012 000 070 U1 bekannt. Aus dieser ist ein Transportbehälter zum Befördern von Gütern bekannt, der eine im Wesentlichen rechteckige Grundfläche aufweist, wobei auf zumindest einer der langen Seiten des Behälters eine Verladeöffnung und eine faltbare Seitenwand angeordnet sind. Die faltbare Seitenwand ist längsverschieblich an einer im oberen Bereich der Verladeöffnung angeordneten oberen Schiene und einer im unteren Bereich der Verladeöffnung angeordneten unteren Schiene zwischen einer vollständig entfalteten Stellung und einer vollständig gefalteten Stellung bewegbar gelagert. Die obere Schiene und die untere Schiene führen zur Lösung des oben genannten Problems auf die Vorder- und/oder Rückseite des Transportbehälters, so dass die faltbare Seitenwand in ihrer bereits vollständig gefalteten Stellung auf die Vorder- und/oder Rückseite des Transportbehälters verbringbar ist. Alternativ oder zusätzlich kann die faltbare Seitenwand auch erst auf der Vorder- und/oder Rückseite des Transportbehälters zusammengefaltet werden.

Aufgabe der Erfindung ist es, eine neuartige, konstruktiv sehr robuste und einfach handhabbare Möglichkeit zu schaffen, die faltbare Seitenwand eines Aufbaus für die Durchführung eines Verladevorgangs aus dem Bereich der Verladeöffnung zu entfernen.

Diese Aufgabe wird bei einem Aufbau der eingangs genannten Art erfindungsgemäß dadurch gelöst, dass wenigstens ein Teil eines an ein seitliches Ende des Aufbaus angrenzenden Endabschnitts der oberen Schiene über wenigstens einen oberen Lenker mit dem übrigen Aufbau verbunden und als Ganzes losgelöst vom übrigen Aufbau bewegbar ist, wobei der obere Lenker um eine erste vertikale Achse schwenkbar an dem Aufbau und um eine zweite vertikale Achse schwenkbar an dem Teil des Endabschnitts der oberen Schiene angeordnet ist und wobei die Länge des Teils des Endabschnitts der oberen Schiene zumindest der Breite der faltbaren Seitenwand in ihrer vollständig oder nahezu vollständig gefalteten Stellung entspricht.

Gemäß der Erfindung ist es nicht erforderlich, die in ihrer vollständig oder nahezu vollständig gefalteten Stellung befindliche faltbare Seitenwand über zusätzliche Schienen aus dem Bereich der Verladeöffnung zu entfernen, was insbesondere bei einer Schienenführung um eine Ecke des Aufbaus mit einer erschwerten Handhabung der faltbaren Seitenwand und einer ungewünschten Erhöhung des Gewichtes des Aufbaus einhergeht. Stattdessen kann die faltbare Seitenwand in ihrer nahezu oder vollständig gefalteten Stellung an dem Teil des Endabschnitts der oberen Schiene angeordnet und anschließend als Ganzes zusammen mit dem Teil des Endabschnitts der oberen Schiene über den Lenker in eine Stellung außerhalb der Verladeöffnung bewegt werden, in der die Verladeöffnung vorzugsweise vollständig freigegeben ist. Die faltbare Seitenwand und somit der Aufbau selbst sind hierdurch im Gegensatz zu herkömmlichen Aufbauten sehr einfach handhabbar, was mit einer vorteilhaften Verringerung der für einen Verladevorgang benötigten Zeit verbunden ist. Zudem ist der Teil des Endabschnitts der oberen Schiene in seiner Ausgangsstellung, in der er mit der übrigen oberen Schiene fluchtet und nicht über das seitliche Ende des Aufbaus hinausragt, an dem Aufbau angeordnet, ohne dass ein die Bemaßung des Aufbaus vergrößernder, zusätzlicher Bauraum benötigt wird. Ferner ist gerade die Anordnung von um eine Ecke des Aufbaus verlaufenden Schienen nachteilig, da in diesen Eckbereichen durch Kontakt mit anderweitigen Gegenständen eine punktuelle Kraft auf die Schienen ausgeübt werden kann, wodurch die Schienen im Eckbereich leicht Schaden nehmen können, was wiederum die Funktion eines entsprechend ausgestatteten Aufbaus einschränken und sogar unmöglich machen kann. Demgegenüber ist die erfindungsgemäße Lösung der obigen Aufgabe deutlich robuster, insbesondere da keine Bauteile benötigt werden, welche an ungünstigen, für äußere Krafteinwirkungen offenen Abschnitten des Aufbaus anzuordnen sind.

Hierbei kann die faltbare Seitenwand zunächst in ihre vollständig oder nahezu vollständig gefaltete Stellung gebracht und an das seitliche Ende des Aufbaus bewegt werden, an das der bewegbare Teil des Endabschnitts der oberen Schiene angrenzt. Anschließend kann die faltbare Seitenwand gemeinsam mit dem Teil des Endabschnitts der oberen Schiene in eine die Verladeöffnung freigebende Stellung bewegt werden. Alternativ kann die faltbare Seitenwand zunächst auch direkt an dem Teil des Endabschnitts der oberen Schiene gefaltet werden, bevor die gemeinsame Bewegung mit dem Teil des Endabschnitts der oberen Schiene erfolgt.

Dass der Teil des Endabschnitts der oberen Schiene über den oberen Lenker als Ganzes losgelöst von dem übrigen Aufbau bewegbar an dem Aufbau angeordnet ist, soll bedeuten, dass das Teil des Endabschnitts der oberen Schiene während seiner Bewegung über den oberen Lenker nicht gelenkig oder anderweitig zwangsgeführt mit dem übrigen Aufbau verbunden ist. Vorzugsweise ist das Teil des Endabschnitts der oberen Schiene während seiner Bewegung über den oberen Lenker ausschließlich mit dem oberen Lenker verbunden und nicht in Kontakt mit dem übrigen Aufbau.

Im Rahmen der Erfindung können auch an beiden Endabschnitten der oberen Schiene entsprechend bewegbar an dem Aufbau angeordnete Teile angeordnet sein, falls gewünscht.

Zudem ist es auch möglich, dass wenigstens ein Endabschnitt der oberen Schiene als Ganzes entsprechend bewegbar an dem Aufbau angeordnet ist.

Gemäß einer vorteilhaften Ausgestaltung der Erfindung ist das Teil des Endabschnitts der oberen Schiene von einer Ausgangsstellung, in der das Teil des Endabschnitts der oberen Schiene fluchtend mit der übrigen oberen Schiene und nicht über das seitliche Ende des Aufbaus hinausragend an dem Aufbau angeordnet ist, in eine Freigabestellung bewegbar ist, in der sich das Teil des Endabschnitts der oberen Schiene als Ganzes losgelöst von dem übrigen Aufbau nicht oberhalb der Verladeöffnung angeordnet. Befindet sich das Teil des Endabschnitts der oberen Schiene in seiner Ausgangsstellung, kann die faltbare Seitenwand entlang der gesamten oberen Schiene hin und her bewegt werden. In der Freigabestellung ist das Teil des Endabschnitts der oberen Schiene seitlich neben der Verladeöffnung angeordnet. In diesem Zustand des Aufbaus gibt die an dem Teil des Endabschnitts der oberen Schiene angeordnete faltbare Seitenwand die Verladeöffnung vorzugsweise vollständig frei.

Nach einer weiteren vorteilhaften Ausgestaltung der Erfindung ist ein Ende des oberen Lenkers mit dem seitlichen Ende des Aufbaus und das andere Ende des oberen Lenkers mit der bei in der Ausgangsstellung befindlichem Teil des Endabschnitts der oberen Schiene dem seitlichen Ende des Aufbaus abgewandten Hälfte des Teils des Endabschnitts der oberen Schiene verbunden. Durch die Verbindung des einen Endes des oberen Lenkers mit dem seitlichen Ende des Aufbaus ist es möglich, den oberen Lenker beispielsweise um bis zu 270° um die erste vertikale Achse verschwenkbar an dem Aufbau anzuordnen. Hierdurch kann gewährleistet werden, dass das Teil des Endabschnitts der oberen Schiene in eine den jeweiligen Gegebenheiten ideal angepasste Stellung bewegt werden kann. Dadurch, dass das andere Ende des oberen Lenkers mit der bei in der Ausgangsstellung befindlichem Teil des Endabschnitts der oberen Schiene dem seitlichen Ende des Aufbaus abgewandten Hälfte des Teils des Endabschnitts der oberen Schiene verbunden ist, wird zudem gewährleistet, dass das Teil des Endabschnitts der oberen Schiene in eine Freigabestellung bewegbar ist, in der das Teil des Endabschnitts der oberen Schiene nicht oberhalb der Verladeöffnung angeordnet ist.

Eine weitere vorteilhafte Ausgestaltung der Erfindung sieht vor, dass der Aufbau wenigstens einen weiteren oberen Lenker aufweist, der um eine dritte vertikale Achse schwenkbar an dem Aufbau und um eine vierte vertikale Achse schwenkbar an dem Teil des Endabschnitts der oberen Schiene angeordnet ist. Durch die Anordnung von wenigstens einem weiteren oberen Lenker an dem Aufbau wird die durch die gelenkige Verbindung der oberen Lenker mit dem übrigen Aufbau gegebene Schwenkeinrichtung deutlich robuster. Zudem kann die Bewegung des Teils des Endabschnitts der oberen Schiene über zwei oder mehrere obere Lenker auf eine gewünschte Art und Weise zwangsgeführt werden, wodurch die Handhabung eines entsprechend ausgestatteten Aufbaus weiter vereinfacht wird.

Gemäß einer weiteren vorteilhaften Ausgestaltung der Erfindung greift der zu dem seitlichen Ende des Aufbaus weiter entfernt angeordnete obere Lenker an dem bei in der Ausgangsstellung befindlichem Teil des Endabschnitts der oberen Schiene dem seitlichen Ende des Aufbaus abgewandten Endbereich des Teils des Endabschnitts der oberen Schiene an, wobei die Länge des zu dem seitlichen Ende des Aufbaus weiter entfernt angeordneten oberen Lenkers dem Abstand entspricht, in dem das an dem übrigen Aufbau gelenkig angeordnete Ende dieses oberen Lenkers zu dem seitlichen Ende des Aufbaus angeordnet ist. Hierdurch kann gewährleistet werden, dass das Teil des Endabschnitts der oberen Schiene in eine Freigabestellung bewegbar ist, in der das Teil des Endabschnitts der oberen Schiene nicht oberhalb der Verladeöffnung angeordnet ist.

Nach einer weiteren vorteilhaften Ausgestaltung der Erfindung sind die beiden oberen Lenker gleichlang ausgebildet oder ist der zu dem seitlichen Ende des Aufbaus weiter entfernt angeordnete obere Lenker kürzer als der andere obere Lenker ausgebildet. Bei gleichlanger Ausbildung der wenigstens zwei oberen Lenker lässt sich das Teil des Endabschnitts der oberen Schiene ausschließlich in zueinander parallele Stellungen bewegen. Ist hingegen der zu dem seitlichen Ende des Aufbaus weiter entfernt angeordnete obere Lenker kürzer als der andere obere Lenker ausgebildet, so erfolgt während der Bewegung des Teils des Endabschnitts der oberen Schiene über die oberen Lenker gleichzeitig eine Schwenkbewegung des Teils des Endabschnitte der oberen Schiene.

Eine weitere vorteilhafte Ausgestaltung der Erfindung sieht vor, dass der Aufbau Mittel zum Sichern der Ausgangsstellung des Teils des Endabschnitts der oberen Schiene an dem übrigen Aufbau aufweist. Die Mittel zum Sichern der Ausgangsstellung des Teils des Endabschnitts der oberen Schiene sind erforderlich, um zu verhindern, dass sich der Teil des Endabschnitts der oberen Schiene unbeabsichtigt, beispielsweise während des Fahrbetriebs eines mit dem Aufbau ausgestatteten Fahrzeugs, in Richtung seiner Freigabestellung bewegt und in seine ausgefahrene Stellung gelangt. Zusätzlich können Mittel zum Sichern der Freigabestellung des Teils des Endabschnitts der oberen Schiene vorhanden sein, mit denen verhindert werden kann, dass sich der Teil des Endabschnitt der oberen Schiene durch äußere Einflüsse, wie beispielsweise die auf ihn einwirkende Gewichtskraft oder Wind, während eines Verladevorgangs in Richtung seiner Ausgangsstellung bewegt, da hierdurch ein Teil der Verladeöffnung durch die faltbare Seitenwand abgedeckt werden könnte, was gerade verhindert werden soll. Die Ausgestaltung dieser Mittel kann an die jeweilige Ausgestaltung des Aufbaus und die technischen Anforderungen angepasst werden.

Gemäß einer weiteren vorteilhaften Ausgestaltung der Erfindung weist der Aufbau Mittel zum Sichern der vollständig oder nahezu vollständig gefalteten Stellung der von dem Teil des Endabschnitts der oberen Schiene gehaltenen, faltbaren Seitenwand auf. Diese sind an dem Teil des Endabschnitts der unteren Schiene angeordnet. Hierdurch kann verhindert werden, dass sich die in ihrer vollständig oder nahezu vollständig gefalteten Stellung befindliche faltbare Seitenwand unbeabsichtigt entfaltet und von dem Teil des Endabschnitts der oberen Schiene abgleitet.

Es wird des Weiteren für vorteilhaft erachtet, wenn der Teil des Endabschnitts der oberen Schiene über den oberen Lenker derart bewegbar an dem Aufbau angeordnet ist, dass der Teil des Endabschnitts der oberen Schiene in eine parallele Stellung zu der weiteren, an das seitliche Ende des Aufbaus angrenzenden Seitenwand des Aufbaus überführbar ist. Vorzugsweise erfolgt diese Bewegung des Teils des Endabschnitts der oberen Schiene zwangsgesteuert. Hierdurch ist die faltbare Seitenwand während eines Verladevorgangs platzsparend an der Vorder- oder Rückseite des Aufbaus anordbar.

Nach einer weiteren vorteilhaften Ausgestaltung der Erfindung weist der Aufbau eine im unteren Bereich der seitlichen Verladeöffnung angeordnete untere Schiene auf, an der die faltbare Seitenwand zwischen einer vollständig entfalteten Stellung und einer vollständig gefalteten Stellung bewegbar gelagert ist, wobei wenigstens ein Teil eines an das seitliche Ende des Aufbaus angrenzenden Endabschnitts der unteren Schiene über wenigstens einen unteren Lenker mit dem übrigen Aufbau verbunden und als Ganzes losgelöst vom übrigen Aufbau bewegbar ist, wobei der untere Lenker um die erste vertikale Achse schwenkbar an dem Aufbau und um die zweite vertikale Achse schwenkbar an dem Teil des Endabschnitts der unteren Schiene angeordnet ist und wobei die Länge des Teils des Endabschnitts der unteren Schiene zumindest der Breite der faltbaren Seitenwand in ihrer vollständig oder nahezu vollständig gefalteten Stellung entspricht. Hiernach wird die faltbare Seitenwand sowohl an ihrem oberen Ende als auch an ihrem unteren Ende in jedem Zustand sicher gehalten, was die Robustheit des Aufbaus weiter erhöht und dessen Handhabbarkeit weiter vereinfacht.

Eine weitere vorteilhafte Ausgestaltung der Erfindung sieht vor, dass das Teil des Endabschnitts der unteren Schiene von einer Ausgangsstellung, in der das Teil des Endabschnitts der unteren Schiene fluchtend mit der übrigen unteren Schiene und nicht über das seitliche Ende des Aufbaus hinausragend an dem Aufbau angeordnet ist, in eine Freigabestellung bewegbar ist, in der das Teil des Endabschnitts der unteren Schiene als Ganzes losgelöst von dem übrigen Aufbau nicht unterhalb der Verladeöffnung angeordnet ist. Befinden sich das Teil des Endabschnitts der oberen Schiene und das Teil des Endabschnitts der unteren Schiene in ihren Ausgangsstellungen, kann die faltbare Seitenwand entlang der gesamten oberen Schiene und der gesamten unteren Schiene hin und her bewegt werden. In ihren Freigabestellungen sind das Teil des Endabschnitts der oberen Schiene und das Teil des Endabschnitts der unteren Schiene seitlich neben der Verladeöffnung angeordnet. In diesem Zustand des Aufbaus gibt die an dem Teil des Endabschnitts der oberen Schiene und an dem Teil des Endabschnitts der unteren Schiene angeordnete faltbare Seitenwand die Verladeöffnung vorzugsweise vollständig frei.

Gemäß einer weiteren vorteilhaften Ausgestaltung der Erfindung ist ein Ende des unteren Lenkers mit dem seitlichen Ende des Aufbaus und das andere Ende des unteren Lenkers mit der bei in der Ausgangsstellung befindlichem Teil des Endabschnitts der unteren Schiene dem seitlichen Ende des Aufbaus abgewandten Hälfte des Teils des Endabschnitts der unteren Schiene verbunden. Durch die Verbindung des einen Endes des unteren Lenkers mit dem seitlichen Ende des Aufbaus ist es möglich, den unteren Lenker beispielsweise um bis zu 270° um die erste vertikale Achse verschwenkbar an dem Aufbau anzuordnen. Hierdurch kann gewährleistet werden, dass das Teil des Endabschnitts der unteren Schiene in eine den jeweiligen Gegebenheiten ideal angepasste Stellung bewegt werden kann. Dadurch, dass das andere Ende des unteren Lenkers mit der bei in der Ausgangsstellung befindlichem Teil des Endabschnitts der unteren Schiene dem seitlichen Ende des Aufbaus abgewandten Hälfte des Teils des Endabschnitts der unteren Schiene verbunden ist, wird zudem gewährleistet, dass das Teil des Endabschnitts der unteren Schiene in eine Freigabestellung bewegbar ist, in der das Teil des Endabschnitts der unteren Schiene nicht oberhalb der Verladeöffnung angeordnet ist.

Nach einer weiteren vorteilhaften Ausgestaltung der Erfindung weist der Aufbau wenigstens einen weiteren unteren Lenker auf, der um die dritte vertikale Achse schwenkbar an dem Aufbau und um die vierte vertikale Achse schwenkbar an dem Teil des Endabschnitts der unteren Schiene angeordnet ist. Durch die Anordnung von wenigstens einem weiteren unteren Lenker an dem Aufbau wird die durch die gelenkige Verbindung der unteren Lenker mit dem übrigen Aufbau gegebene Schwenkeinrichtung deutlich robuster. Zudem kann die Bewegung des Teils des Endabschnitts der unteren Schiene über zwei oder mehrere untere Lenker auf eine gewünschte Art und Weise zwangsgeführt werden, wodurch die Handhabung eines entsprechend ausgestatteten Aufbaus weiter vereinfacht wird.

Eine weitere vorteilhafte Ausgestaltung der Erfindung sieht vor, dass der zu dem seitlichen Ende des Aufbaus weiter entfernt angeordnete untere Lenker an dem bei in der Ausgangsstellung befindlichem Teil des Endabschnitts der unteren Schiene dem seitlichen Ende des Aufbaus abgewandten Ende des Teils des Endabschnitts der unteren Schiene angreift, wobei die Länge des zu dem seitlichen Ende des Aufbaus weiter entfernt angeordneten unteren Lenkers dem Abstand entspricht, in dem das an dem übrigen Aufbau gelenkig angeordnete Ende dieses unteren Lenkers zu dem seitlichen Ende des Aufbaus angeordnet ist. Hierdurch kann gewährleistet werden, dass das Teil des Endabschnitts der unteren Schiene in eine Freigabestellung bewegbar ist, in der das Teil des Endabschnitts der unteren Schiene nicht unterhalb der Verladeöffnung angeordnet ist.

Gemäß einer weiteren vorteilhaften Ausgestaltung der Erfindung sind die beiden unteren Lenker gleichlang ausgebildet oder ist der zu dem seitlichen Ende des Aufbaus weiter entfernt angeordnete untere Lenker kürzer als der andere untere Lenker ausgebildet. Bei gleichlanger Ausbildung der wenigstens zwei unteren Lenker lässt sich das Teil des Endabschnitts der unteren Schiene ausschließlich in zueinander parallele Stellungen bewegen. Ist hingegen der zu dem seitlichen Ende des Aufbaus weiter entfernt angeordnete untere Lenker kürzer als der andere untere Lenker ausgebildet, so erfolgt während der Bewegung des Teils des Endabschnitts der unteren Schiene über die unteren Lenker gleichzeitig eine Schwenkbewegung des Teils des Endabschnitte der unteren Schiene.

Nach einer weiteren vorteilhaften Ausgestaltung der Erfindung weist der Aufbau Mittel zum Sichern der Ausgangsstellung des Teils des Endabschnitts der unteren Schiene an dem übrigen Aufbau auf. Die Mittel zum Sichern der Ausgangsstellung des Teils des Endabschnitts der unteren Schiene sind erforderlich, um zu verhindern, dass der Teil des Endabschnitts der unteren Schiene unbeabsichtigt, beispielsweise während des Fahrbetriebs eines mit dem Aufbau ausgestatteten Fahrzeugs, sich in Richtung seiner Freigabestellung bewegt und in seine ausgefahrene Stellung gelangt. Zusätzlich können Mittel zum Sichern der Freigabestellung des Teils des Endabschnitts der unteren Schiene vorhanden sein, mit denen verhindert werden kann, dass sich der Teil des Endabschnitt der unteren Schiene durch äußere Einflüsse, wie beispielsweise die auf ihn einwirkende Gewichtskraft oder Wind, während eines Verladevorgangs in Richtung seiner Ausgangsstellung bewegt, da hierdurch ein Teil der Verladeöffnung durch die faltbare Seitenwand abgedeckt werden könnte, was gerade verhindert werden soll. Die Ausgestaltung dieser Mittel kann an die jeweilige Ausgestaltung des Aufbaus und die technischen Anforderungen angepasst werden.

Eine weitere vorteilhafte Ausgestaltung der Erfindung sieht vor, dass der Aufbau Mittel zum Sichern der vollständig oder nahezu vollständig gefalteten Stellung der von dem Teil des Endabschnitts der unteren Schiene gehaltenen, faltbaren Seitenwand aufweist. Diese sind an dem Teil des Endabschnitts der unteren Schiene angeordnet. Hierdurch kann verhindert werden, dass sich die in ihrer vollständig oder nahezu vollständig gefalteten Stellung befindliche faltbare Seitenwand unbeabsichtigt entfaltet und von dem Teil des Endabschnitts der unteren Schiene abgleitet.

Die gemäß den vorbeschriebenen Ausgestaltungen beschriebenen Einrichtungen zum Bewegen der Teile der Endabschnitte der unteren und der oberen Schiene können oben und unten am Aufbau gleich oder unterschiedlich ausgebildet sein.

Es wird des Weiteren für vorteilhaft erachtet, wenn der Teil des Endabschnitts der unteren Schiene über den unteren Lenker derart bewegbar an dem Aufbau angeordnet ist, dass der Teil des Endabschnitts der unteren Schiene in eine parallele Stellung zu der weiteren, an das seitliche Ende des Aufbaus angrenzenden Seitenwand des Aufbaus überführbar ist. Vorzugsweise erfolgt diese Bewegung des Teils des Endabschnitts der unteren Schiene zwangsgesteuert. Hierdurch ist die faltbare Seitenwand während eines Verladevorgangs platzsparend an der Vorder- oder Rückseite des Aufbaus anordbar.

Ferner wird es als vorteilhaft erachtet, wenn das Dach des Aufbaus wenigstens an einer Seite mittels eines Kraftantriebs heb- und senkbar ist, wobei das obere Ende oder das untere Ende der faltbaren Seitenwand über in vertikaler Richtung teleskopierbare Führungseinheiten bewegbar an der oberen Schiene bzw. an der oberen und unteren Schiene gelagert ist. Durch diese Bewegbarkeit des Daches relativ zu dem übrigen Aufbau werden eine maximale Ausnutzung des zur Verfügung stehenden Laderaums und ein einfaches Be- und Entladen des Aufbaus ermöglicht. Wegen der Anordnung von vertikal teleskopierbaren Führungseinheiten als Mittel zum Lagern der faltbaren Seitenwand an den Schienen ist eine Bewegung des Daches des Aufbaus relativ zu dem übrigen Aufbau in keiner Positionierung der faltbaren Seitenwand relativ zu dem übrigen Aufbau eingeschränkt.

Es kann des Weiteren vorgesehen sein, dass der Teil des Endabschnitts der oberen Schiene und der Teil des Endabschnitts der unteren Schiene über ein vertikal ausgerichtetes Stabilisierungselement miteinander verbunden sind. Hierdurch wird eine konstruktiv robuste Einheit aus den Teilen der Endabschnitte und dem Stabilisierungselement gebildet, um die Handhabbarkeit des entsprechend ausgebildeten Aufbaus zu vereinfachen. Das Stabilisierungselement kann als Profil aus Metall, Kunststoff oder einem Verbundwerkstoff hergestellt sein.

Zudem kann die faltbare Seitenwand formstabile Faltelemente aufweisen, die an der oberen bzw. unteren Schiene bewegbar angeordnet und um vertikale Schwenkachsen schwenkbeweglich miteinander verbunden sind. Es besteht auch die Möglichkeit, die faltbare Seitenwand des Aufbaus allein durch gelenkig miteinander verbundene Faltelemente auszubilden, ohne dass zudem eine Plane vorhanden sein muss. Eine solche faltbare Seitenwand lässt sich schnell und einfach von ihrer entfalteten Stellung in ihre vollständig oder nahezu vollständig gefaltete Stellung überführen oder umgekehrt. Die faltbare Seitenwand kann auch eine Plane aufweisen, welche an der oberen Schiene oder an den Faltelementen aufgehängt ist. Die Aufhängung der Plane kann gemäß den jeweiligen Anforderungen und Wünschen variiert werden. Die faltbare Seitenwand kann auch allein durch eine Plane gebildet sein, die an der oberen oder an der oberen und unteren Schiene bewegbar angeordnet ist. Hiernach kann auf die Anordnung von formstabilen Faltelementen verzichtet werden. Es wird lediglich eine sich auf gewünschte Art und Weise faltende Plane an der oberen Schiene oder an der oberen und unteren Schiene geführt. Ferner können an der Plane Versteifungselemente angeordnet sein. Diese Versteifungselemente können der Unterstützung der funktionsgemäßen Faltung der faltbaren Seitenwand dienen. Auch können Sie vorgesehen sein, um eine Beschädigung der Plane in bestimmten Bereichen zu verhindern, welche durch einen Kontakt mit Gütern oder durch äußere Gewalt, beispielsweise durch einen beabsichtigten Einbruch, entstehen könnten.

Die Erfindung lässt sich sowohl bei neu hergestellten Aufbauten als auch als Nachrüstung von bereits vorhandenen Aufbauten realisieren, was mit den oben genannten Vorteilen verbunden ist. Hierbei können verschiedenste Kombinationen der vorgenannten Ausgestaltungen verwirklicht sein.

Weitere Vorteile und Merkmale der vorliegenden Erfindung werden im Folgenden anhand des in den beiliegenden Figuren gezeigten Ausführungsbeispiels für den erfindungsgemäßen Aufbau näher erläutert. Dabei zeigen:
- Figur 1: eine Seitenansicht eines Ausführungsbeispiels für den erfindungsgemäßen Aufbau im geschlossenen Zustand,
- Figur 2: eine Seitenansicht des in Figur 1 gezeigten Aufbaus mit gefalteter faltbarer Seitenwand,
- Figur 3: eine Ansicht des in Figur 2 gezeigten Aufbaus von oben,
- Figur 4: eine Ansicht des in Figur 2 gezeigten Aufbaus von oben in drei unterschiedlichen Zuständen,
- Figur 5: eine Seitenansicht eines in Figur 4 gezeigten Zustands des Aufbaus,
- Figur 6: eine Ansicht des in Figur 5 gezeigten Aufbaus von oben in zwei unterschiedlichen Zuständen,
- Figur 7: eine Seitenansicht des in Figur 5 gezeigten Aufbaus mit angehobenem Dach in zwei unterschiedlichen Zuständen, und
- Figur 8: eine Ansicht eines weiteren Ausführungsbeispiels für den erfindungsgemäßen Aufbau von oben in vier unterschiedlichen Zuständen.

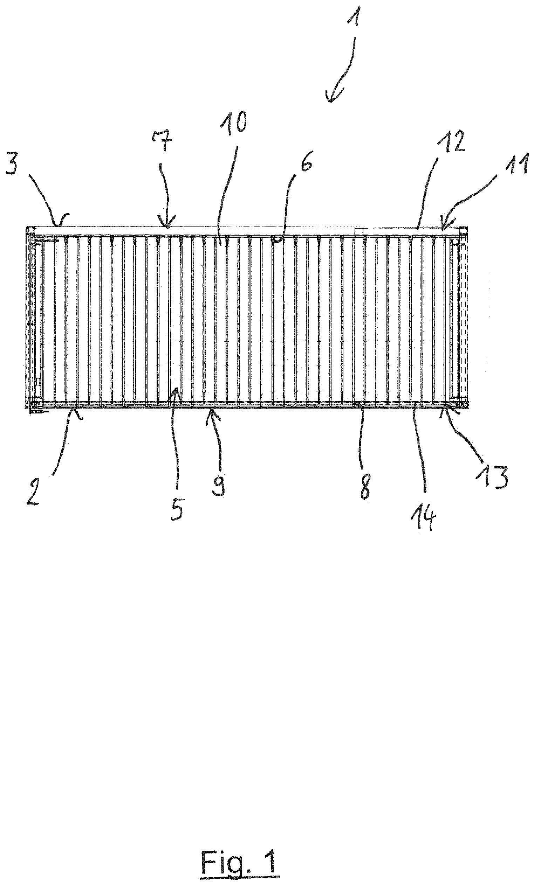

In Figur 1 ist ein Aufbau 1 zum Befördern von Gütern in einer Seitenansicht dargestellt. Der Aufbau 1 umfasst einen Boden 2 und ein Dach 3. Auf der dem Betrachter zugewandten Seite des Aufbaus 1 ist eine seitliche Verladeöffnung 4 angeordnet, die in dem in Figur 1 gezeigten Zustand des Aufbaus 1 vollständig mit einer faltbaren Seitenwand 5 abgedeckt und hierdurch geschlossen ist.

Die faltbare Seitenwand 5 ist über Führungseinrichtungen 6 an einer im oberen Bereich der seitlichen Verladeöffnung 4 angeordneten oberen Schiene 7 und über Führungseinrichtungen 8 an einer im unteren Bereich der seitlichen Verladeöffnung 4 angeordneten unteren Schiene 9 zwischen der gezeigten vollständig entfalteten Stellung und einer vollständig gefalteten Stellung bewegbar gelagert. Die faltbare Seitenwand 5 weist formstabile Faltelemente 10 auf, die an der oberen Schiene 7 und der unteren Schiene 9 bewegbar angeordnet und um nicht näher dargestellte vertikale Schwenkachsen schwenkbeweglich miteinander verbunden sind. Zudem weist die faltbare Seitenwand 5 eine Plane auf, welche an der oberen Schiene 7 und gegebenenfalls der unteren Schiene 9 oder an den Faltelementen 10 aufgehängt und aus Übersichtlichkeitsgründen nicht näher dargestellt ist.

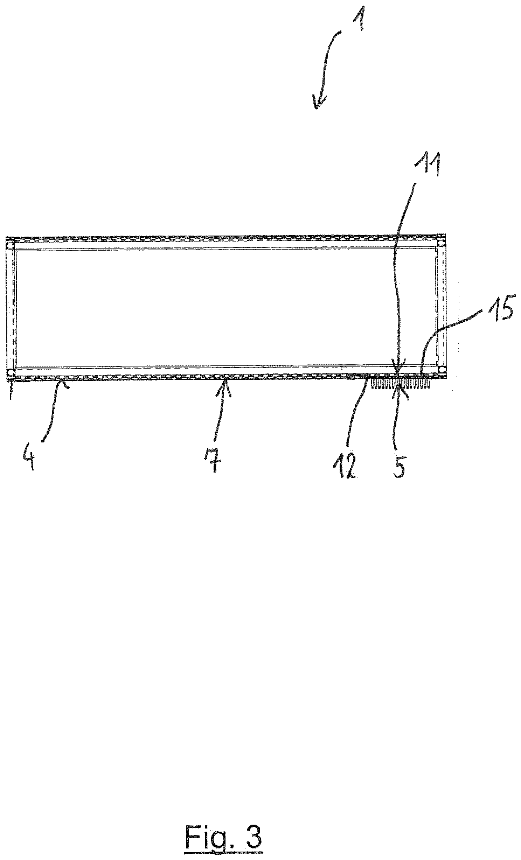

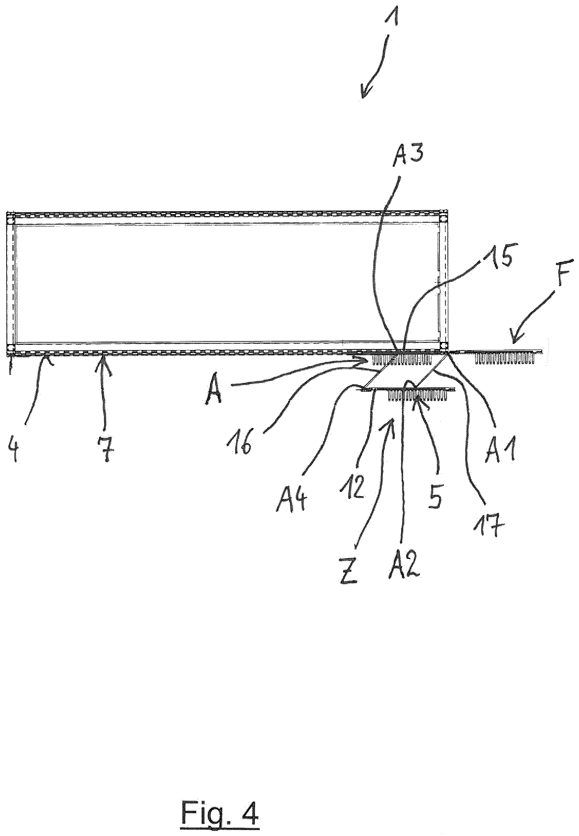

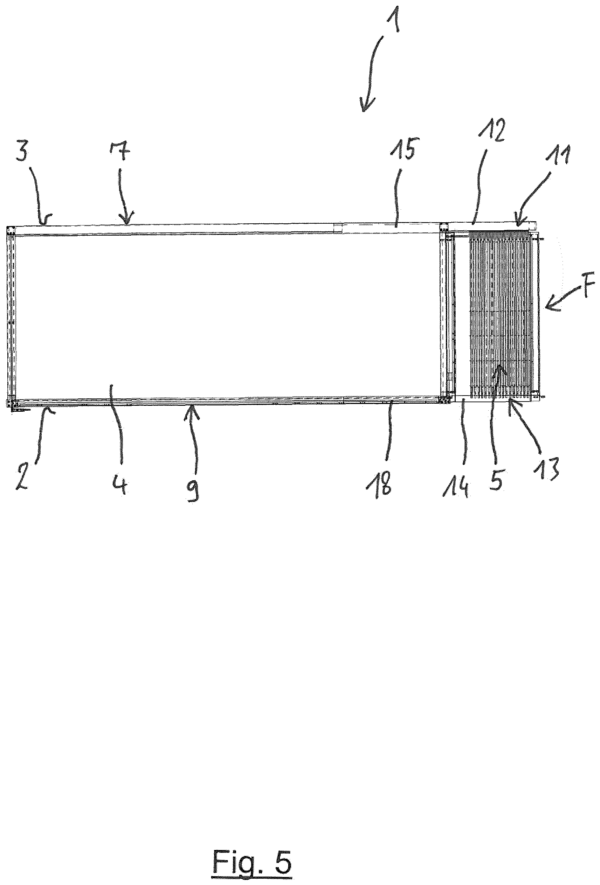

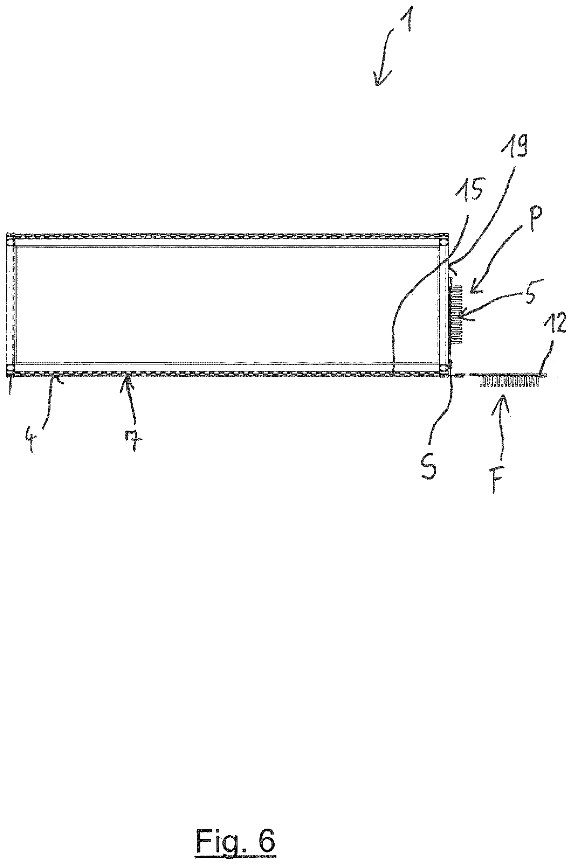

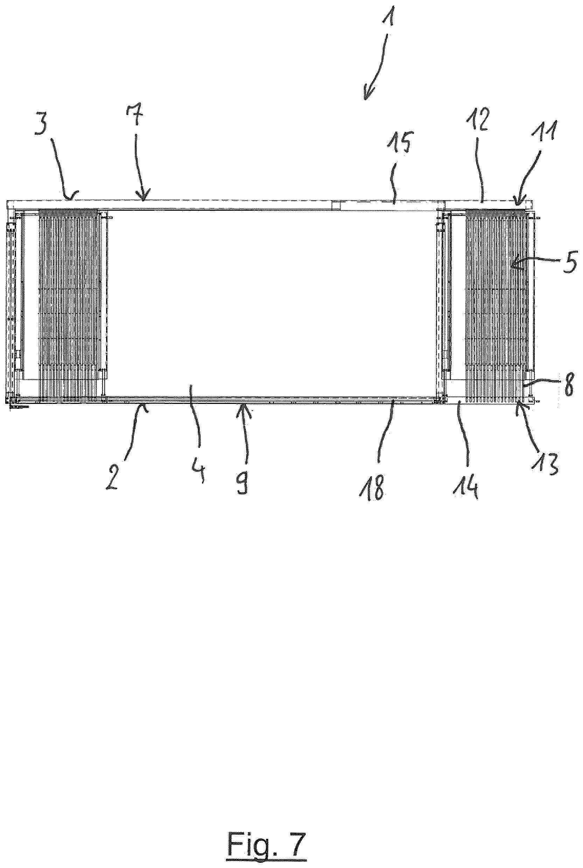

Die obere Schiene 7 weist einen an das rechts dargestellte seitliche Ende des Aufbaus 1 angrenzenden Endabschnitt 11 auf, von dem ein in den Figuren 3 bis 7 besser ersichtlicher bewegbarer Teil 12 zwischen der in Figur 1 gezeigten Ausgangsstellung und den in den Figuren 4 und 6 gezeigten Stellungen hin und her bewegbar an dem Aufbau 1 angeordnet ist. Wie Figur 1 zeigt, ragt der Teil 12 des Endabschnitts 11 der oberen Schiene 7 in seiner Ausgangsstellung nicht über das seitliche Ende des Aufbaus 1 hinaus. Auch die untere Schiene 9 weist einen an das rechts dargestellte seitliche Ende des Aufbaus 1 angrenzenden Endabschnitt 13 auf, von dem ein in den Figuren 5 und 7 besser ersichtlicher bewegbarer Teil 14 zwischen der in Figur 1 gezeigten Ausgangsstellung und den in den Figuren 4 und 6 gezeigten Stellungen hin und her bewegbar an dem Aufbau 1 angeordnet ist.

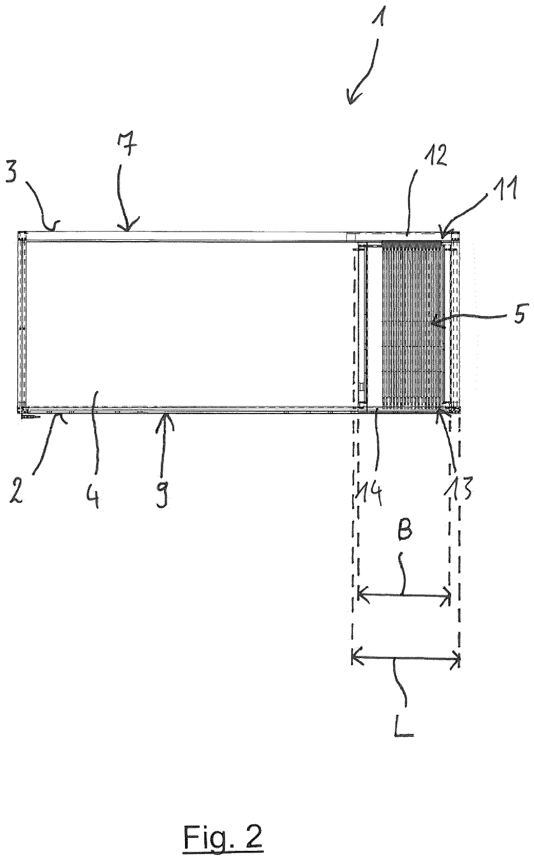

Figur 2 zeigt den in Figur 1 dargestellten Aufbau 1 mit vollständig oder nahezu vollständig gefalteter Seitenwand 5. In diesem Zustand deckt die faltbare Seitenwand 5 einen Teil der Verladeöffnung 4 ab, welche dadurch nicht vollständig zugänglich ist. Die faltbare Seitenwand 5 ist in einem Bereich der Verladeöffnung 4 angeordnet, in dem sie von den Teilen 12 und 14 der Endabschnitte 11 und 13 der Schienen 7 und 9 gehalten wird. Wie zu erkennen ist, entspricht die Länge L der Teile 12 und 14 der Endabschnitte 11 und 13 zumindest der Breite B der faltbaren Seitenwand 5 in ihrer vollständig oder nahezu vollständig gefalteten Stellung.

Figur 3 zeigt den in Figur 2 gezeigten Aufbau 1 von oben, wodurch der bewegbare Teil 12 des Endabschnitts 11 der oberen Schiene 7 zu erkennen ist. Des Weiteren weist der Endabschnitt 11 der oberen Schiene 7 einen ortsfest am Aufbau 1 angeordneten Teil 15 auf.

Figur 4 zeigt eine Ansicht des in Figur 2 gezeigten Aufbaus 1 von oben in drei unterschiedlichen Zuständen. Es sind die Ausgangsstellung A, eine Zwischenstellung Z und die Freigabestellung F des bewegbaren Teils 12 des Endabschnitts 11 der oberen Schiene 7 gezeigt. Das Teil 12 des Endabschnitts 11 der oberen Schiene 7 ist über zwei gleichlange oberen Lenker 16 und 17 mit dem übrigen Aufbau 1 verbunden und als Ganzes losgelöst vom übrigen Aufbau 1 bewegbar, was insbesondere die Zwischenstellung Z verdeutlicht.

Der näher an dem seitlichen Ende des Aufbaus 1 angeordnete Lenker 17 ist um eine erste vertikale Achse A1 schwenkbar an dem Aufbau 1 und um eine zweite vertikale Achse A2 schwenkbar an dem Teil 12 des Endabschnitts 11 der oberen Schiene 7 angeordnet. Das eine Ende des oberen Lenkers 17 ist mit dem seitlichen Ende des Aufbaus 1 und das andere Ende des oberen Lenkers 17 ist mit der bei in der Ausgangsstellung befindlichem Teil 12 des Endabschnitts 11 der oberen Schiene 7 dem seitlichen Ende des Aufbaus 1 abgewandten Hälfte des Teils 12 des Endabschnitts 11 der oberen Schiene 7 verbunden. Der weitere obere Lenker 16 ist um eine dritte vertikale Achse A3 schwenkbar an dem Aufbau 1 und um eine vierte vertikale Achse A4 schwenkbar an dem Teil 12 des Endabschnitts 11 der oberen Schiene 7 angeordnet. Der zu dem seitlichen Ende des Aufbaus 1 weiter entfernt angeordnete obere Lenker 16 greift an dem bei in der Ausgangsstellung befindlichem Teil 12 des Endabschnitts 11 der oberen Schiene 7 dem seitlichen Ende des Aufbaus 1 abgewandten Endbereich des Teils 12 des Endabschnitts 11 der oberen Schiene 7 an, wobei die Länge des zu dem seitlichen Ende des Aufbaus 1 weiter entfernt angeordneten oberen Lenkers 16 dem Abstand entspricht, in dem das an dem übrigen Aufbau 1 gelenkig angeordnete Ende dieses oberen Lenkers 16 zu dem seitlichen Ende des Aufbaus 1 angeordnet ist. Die Einrichtung zum Bewegen des Teils 14 des Endabschnitts 13 der unteren Schiene 9 soll entsprechend ausgebildet sein.

Figur 5 zeigt eine Seitenansicht des in der Figur 4 gezeigten Aufbaus 1 mit in ihren Freigabestellungen F befindlichen Teilen 12 und 14 der Endabschnitte 11 und 13 der Schienen 7 und 9. Die faltbare Seitenwand 5 ist an den Teilen 12 und 14 der Endabschnitte 11 und 13 angeordnet und wird von diesen gehalten. Die Verladeöffnung 4 ist in diesem Zustand des Aufbaus 1 vollständig freigegeben. Ferner sind die ortsfest an dem Aufbau 1 angeordneten Teile 15 und 18 zu erkennen.

Figur 6 zeigt eine Ansicht des in Figur 5 gezeigten Aufbaus 1 von oben in zwei unterschiedlichen Zuständen. In dem einen Zustand befinden sich die Teile 12 und 14 der Endabschnitte 11 und 13 sowie die daran angeordnete faltbare Seitenwand 5 in der Freigabestellung F, wie sie in Figur 5 dargestellt ist. Des Weiteren ist ein Zustand des Aufbaus 1 gezeigt, in dem sich die Teile 12 und 14 der Endabschnitte 11 und 13 sowie die faltbare Seitenwand 5 ist einer Stellung P befinden, in der die Teile 12 und 14 der Endabschnitte 11 und 13 parallel zu der an das seitliche Ende des Aufbaus 1 angrenzenden, weiteren Seitenwand 19 angeordnet sind. Um die Teile 12 und 14 der Endabschnitte 11 und 13 zwischen den Stellungen F und P hin und her bewegen zu können, sind die Teile 12 und 14 der Endabschnitte 11 und 13 auf nicht näher dargestellte Art und Weise um eine vertikale Schwenkachse S schwenkbar an dem seitlichen Ende des Aufbaus 1 angeordnet. Zum Verschwenken der Teile 12 und 14 der Endabschnitte 11 und 13 sind diese vorzugsweise von den weiter entfernt zu dem seitlichen Ende des Aufbaus 1 angeordneten Lenkern entkoppelt. Durch das Verschwenken der Teile 12 und 14 der Endabschnitte 11 und 13 lässt sich die gefaltete faltbare Seitenwand 5 platzsparend an der Vorderseite oder Rückseite des Aufbaus 1 anordnen. In einer solchen Stellung ist die faltbare Seitenwand 5 weitestgehend vor Beschädigungen bei einem Verladevorgang, beispielsweise durch einen Kontakt mit Ladung oder einem Flurförderfahrzeug, geschützt. Der Aufbau 1 kann Mittel zum Sichern der parallelen Stellungen P der Teile 12 und 14 der Endabschnitte 11 und 13 aufweisen. Hierdurch kann verhindert werden, dass sich die Teile 12 und 14 der Endabschnitte 11 und 13 bei einem Verladevorgang zusammen mit der an ihnen angeordneten faltbaren Seitenwand 5 selbsttätig oder durch äußere Einflüsse aus der parallelen Stellung P heraus bewegen.

Figur 7 zeigt eine Seitenansicht des in Figur 5 gezeigten Aufbaus 1 mit angehobenem Dach 3 in zwei unterschiedlichen Zuständen. Das Anheben des Daches 3 erfolgt über einen nicht dargestellten Kraftantrieb. Der obere Endabschnitt 11 wird beim Anheben des Daches 3 mit angehoben. Hierdurch wird auch die faltbare Seitenwand 5 angehoben. Um diese Bewegung der faltbaren Seitenwand 5 gegenüber dem unteren Endabschnitt 13, welcher nicht mit angehoben wird, aufzufangen, ist das untere Ende der faltbaren Seitenwand 5 über in vertikaler Richtung teleskopierbare Führungseinheiten 8 bewegbar an der unteren Schiene 9 beziehungsweise an deren Endabschnitt 13 beziehungsweise an dessen Teil 14 gelagert. Die beiden gezeigten Zustände des Aufbaus 1 unterscheiden sich durch die Relativstellung der faltbaren Seitenwand 5 zu dem übrigen Aufbau 1.

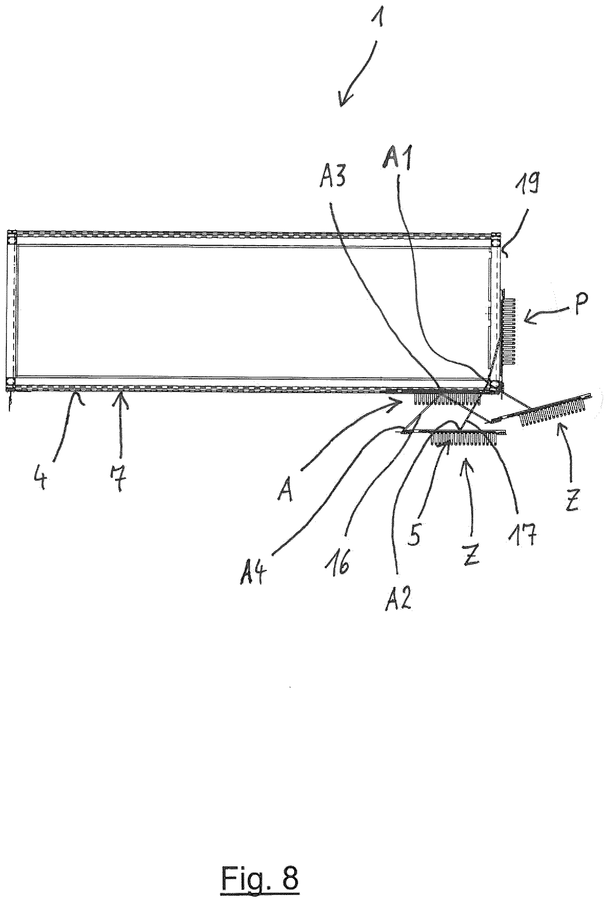

Figur 8 zeigt eine Ansicht eines weiteren Ausführungsbeispiels für den erfindungsgemäßen Aufbau 1 von oben in vier unterschiedlichen Zuständen. Gemäß dieser Ausführungsform der Erfindung ist der näher am seitlichen Ende des Aufbaus 1 angeordnete Lenker 17 abweichend zu Figur 4 an der Oberseite des Dachs 3 des Aufbaus 1 um die erste Achse A1 schwenkbar gelagert. Die Lenker 16 und 17 sind gleichlang, können aber auch unterschiedlich lang ausgebildet sein. Durch die im Verhältnis zu Figur 4 gezeigte Verlagerung der ersten Achse A1 wird das Teil 12 des Endabschnitts 11 der oberen Schiene 7 zusammen mit der faltbaren Seitenwand 5 zwangsgesteuert von der Ausgangsstellung A über die beiden gezeigten Zwischenstellungen Z in die Stellung P überführt, in der das Teil 12 des Endabschnitts 11 der oberen Schiene 7 parallel zu der an das seitliche Ende des Aufbaus 1 angrenzenden weiteren Seitenwand 19 angeordnet ist. Die Lenker 16 und 17 müssen nicht, wie gezeigt gerade ausgebildet sein, sondern können auch eine gekrümmte Formgebung aufweisen oder gekröpft ausgebildet sein. Des Weiteren kann der Lenker 17 auch nicht auf dem Dach 3 des Aufbaus 1, sondern in einer darunter liegenden Position entsprechend schwenkbar mit dem Aufbau 1 verbunden sein. Vorzugsweise sind die nicht gezeigten unteren Lenker entsprechend den oberen Lenkern 16 und 17 ausgebildet. Der zu dem seitlichen Ende des Aufbaus 1 näher angeordnete untere Lenker kann unter dem Boden 2 des Aufbaus 1 schwenkbar angeordnet oder in einer darüber liegenden Position mit dem Aufbau verbunden sein.

**Bezugszeichenliste:**

| Zeichen | Bezeichnung |
|---|---|
| | |
| 1 | Aufbau |
| 2 | Boden |
| 3 | Dach |
| 4 | Verladeöffnung |
| 5 | faltbare Seitenwand |
| 6 | Führungseinrichtung |
| 7 | obere Schiene |
| 8 | Führungseinrichtung |
| 9 | untere Schiene |
| 10 | Faltelement |
| 11 | oberer Endabschnitt |
| 12 | bewegbarer Teil |
| 13 | unterer Endabschnitt |
| 14 | bewegbarer Teil |
| 15 | ortsfester Endabschnittteil |
| 16 | Lenker |
| 17 | Lenker |
| 18 | ortsfester Endabschnittteil |
| 19 | Seitenwand |
| B | Breite |
| L | Länge |
| S | Schwenkachse |
| P | parallele Stellung |
| F | Freigabestellung |
| A | Ausgangsstellung |
| Z | Zwischenstellung |

## Patentansprüche

1. Aufbau (1) zum Befördern von Gütern, insbesondere für einen Lastkraftwagen, einen Anhänger, einen Absetzcontainer, eine Wechselbrücke, einen Sattelauflieger oder dergleichen, aufweisend wenigstens eine seitliche Verladeöffnung (4) und eine faltbare Seitenwand (5), wobei die faltbare Seitenwand (5) zumindest an einer im oberen Bereich der seitlichen Verladeöffnung (4) angeordneten oberen Schiene (7) zwischen einer vollständig entfalteten Stellung und einer vollständig gefalteten Stellung bewegbar gelagert ist,
**dadurch gekennzeichnet,**
**dass** wenigstens ein Teil (12) eines an ein seitliches Ende des Aufbaus (1) angrenzenden Endabschnitts (11) der oberen Schiene (7) über wenigstens einen oberen Lenker (16, 17) mit dem übrigen Aufbau (1) verbunden und als Ganzes losgelöst vom übrigen Aufbau (1) bewegbar ist, wobei der obere Lenker (16, 17) um eine erste vertikale Achse (A1) schwenkbar an dem Aufbau (1) und um eine zweite vertikale Achse (A2) schwenkbar an dem Teil (12) des Endabschnitts (11) der oberen Schiene (7) angeordnet ist und wobei die Länge (L) des Teils (12) des Endabschnitts (11) der oberen Schiene (7) zumindest der Breite (B) der faltbaren Seitenwand (5) in ihrer vollständig oder nahezu vollständig gefalteten Stellung entspricht.

2. Aufbau (1) nach Anspruch 1, **dadurch gekennzeichnet, dass** das Teil (12) des Endabschnitts (11) der oberen Schiene (7) von einer Ausgangsstellung (A), in der das Teil (12) des Endabschnitts (11) der oberen Schiene (7) fluchtend mit der übrigen oberen Schiene (7) und nicht über das seitliche Ende des Aufbaus (1) hinausragend an dem Aufbau (1) angeordnet ist, in eine Freigabestellung (F) bewegbar ist, in der das Teil (12) des Endabschnitts (11) der oberen Schiene (7) als Ganzes losgelöst von dem übrigen Aufbau (1) nicht oberhalb der Verladeöffnung (4) angeordnet ist.

3. Aufbau (1) nach Anspruch 2, **dadurch gekennzeichnet, dass** ein Ende des oberen Lenkers (16, 17) mit dem seitlichen Ende des Aufbaus (1) und das andere Ende des oberen Lenkers (16, 17) mit der bei in der Ausgangsstellung (A) befindlichem Teil (12) des Endabschnitts (11) der oberen Schiene (7) dem seitlichen Ende des Aufbaus (1) abgewandten Hälfte des Teils (12) des Endabschnitts (11) der oberen Schiene (7) verbunden ist.

4. Aufbau (1) nach Anspruch 1 bis 3, **gekennzeichnet durch** wenigstens einen weiteren oberen Lenker (16, 17), der um eine dritte vertikale Achse (A3) schwenkbar an dem Aufbau (1) und um eine vierte vertikale Achse (A4) schwenkbar an dem Teil (12) des Endabschnitts (11) der oberen Schiene (7) angeordnet ist.

5. Aufbau (1) nach Anspruch 4, **dadurch gekennzeichnet, dass** der zu dem seitlichen Ende des Aufbaus (1) weiter entfernt angeordnete obere Lenker (16) an dem bei in der Ausgangsstellung (A) befindlichem Teil (12) des Endabschnitts (11) der oberen Schiene (7) dem seitlichen Ende des Aufbaus (1) abgewandten Endbereich des Teils (12) des Endabschnitts (11) der oberen Schiene (7) angreift, wobei die Länge des zu dem seitlichen Ende des Aufbaus (1) weiter entfernt angeordneten oberen Lenkers (16) dem Abstand entspricht, in dem das an dem übrigen Aufbau (1) gelenkig angeordnete Ende dieses oberen Lenkers (16) zu dem seitlichen Ende des Aufbaus (1) angeordnet ist.

6. Aufbau (1) nach Anspruch 4 oder 5, **dadurch gekennzeichnet, dass** die beiden oberen Lenker (16, 17) gleichlang ausgebildet sind oder dass der zu dem seitlichen Ende des Aufbaus (1) weiter entfernt angeordnete obere Lenker (16) kürzer als der andere obere Lenker (17) ausgebildet ist.

7. Aufbau (1) nach einem der vorhergehenden Ansprüche, **gekennzeichnet durch** Mittel zum Sichern der Ausgangsstellung (A) des Teils (12) des Endabschnitts (11) der oberen Schiene (7) an dem übrigen Aufbau (1).

8. Aufbau (1) nach einem der vorhergehenden Ansprüche, **gekennzeichnet durch** Mittel zum Sichern der vollständig oder nahezu vollständig gefalteten Stellung der von dem Teil (12) des Endabschnitts (11) der oberen Schiene (7) gehaltenen, faltbaren Seitenwand (5).

9. Aufbau (1) nach einem der vorhergehenden Ansprüche, **dadurch gekennzeichnet, dass** der Teil (12) des Endabschnitts (11) der oberen Schiene (7) über den oberen Lenker (16, 17) derart bewegbar an dem Aufbau (1) angeordnet ist, dass der Teil (12) des Endabschnitts (11) der oberen Schiene (7), vorzugsweise zwangsgesteuert, in eine parallele Stellung (P) zu der weiteren, an das seitliche Ende des Aufbaus (1) angrenzenden Seitenwand (19) des Aufbaus (1) überführbar ist.

10. Aufbau (1) nach einem der vorhergehenden Ansprüche, **gekennzeichnet durch** eine im unteren Bereich der seitlichen Verladeöffnung (4) angeordnete untere Schiene (9), an der die faltbare Seitenwand (5) zwischen einer vollständig entfalteten Stellung und einer vollständig gefalteten Stellung bewegbar gelagert ist, wobei wenigstens ein Teil (14) eines an das seitliche Ende des Aufbaus (1) angrenzenden Endabschnitts (13) der unteren Schiene (9) über wenigstens einen unteren Lenker mit dem übrigen Aufbau (1) verbunden und als Ganzes losgelöst vom übrigen Aufbau (1) bewegbar ist, wobei der untere Lenker um die erste vertikale Achse (A1) schwenkbar an dem Aufbau (1) und um die zweite vertikale Achse (A2) schwenkbar an dem Teil (14) des Endabschnitts (13) der unteren Schiene (9) angeordnet ist und wobei die Länge (L) des Teils (14) des Endabschnitts (13) der unteren Schiene (9) zumindest der Breite (B) der faltbaren Seitenwand (5) in ihrer vollständig oder nahezu vollständig gefalteten Stellung entspricht.

11. Aufbau (1) nach Anspruch 10, **dadurch gekennzeichnet, dass** das Teil (14) des Endabschnitts (13) der unteren Schiene (9) von einer Ausgangsstellung (A), in der das Teil (14) des Endabschnitts (13) der unteren Schiene (9) fluchtend mit der übrigen unteren Schiene (9) und nicht über das seitliche Ende des Aufbaus (1) hinausragend an dem Aufbau (1) angeordnet ist, in eine Freigabestellung (F) bewegbar ist, in der das Teil (14) des Endabschnitts (13) der unteren Schiene (9) als Ganzes losgelöst von dem übrigen Aufbau (1) nicht unterhalb der Verladeöffnung (4) angeordnet ist.

12. Aufbau (1) nach Anspruch 11, **dadurch gekennzeichnet, dass** ein Ende des unteren Lenkers mit dem seitlichen Ende des Aufbaus (1) und das andere Ende des unteren Lenkers mit der bei in der Ausgangsstellung (A) befindlichem Teil (14) des Endabschnitts (13) der unteren Schiene (9) dem seitlichen Ende des Aufbaus (1) abgewandten Hälfte des Teils (14) des Endabschnitts (13) der unteren Schiene (9) verbunden ist.

13. Aufbau (1) nach einem der Ansprüche 10 bis 12, **gekennzeichnet durch** wenigstens einen weiteren unteren Lenker, der um die dritte vertikale Achse (A3) schwenkbar an dem Aufbau (1) und um die vierte vertikale Achse (A4) schwenkbar an dem Teil (14) des Endabschnitts (13) der unteren Schiene (9) angeordnet ist.

14. Aufbau (1) nach Anspruch 11, **dadurch gekennzeichnet, dass** der zu dem seitlichen Ende des Aufbaus (1) weiter entfernt angeordnete untere Lenker an dem bei in der Ausgangsstellung (A) befindlichem Teil (14) des Endabschnitts (13) der unteren Schiene (9) dem seitlichen Ende des Aufbaus (1) abgewandten Ende des Teils (14) des Endabschnitts (13) der unteren Schiene (9) angreift, wobei die Länge des zu dem seitlichen Ende des Aufbaus (1) weiter entfernt angeordneten unteren Lenkers dem Abstand entspricht, in dem das an dem übrigen Aufbau (1) gelenkig angeordnete Ende dieses unteren Lenkers zu dem seitlichen Ende des Aufbaus (1) angeordnet ist.

15. Aufbau (1) nach Anspruch 13 oder 14, **dadurch gekennzeichnet, dass** die beiden unteren Lenker gleichlang ausgebildet sind oder dass der zu dem seitlichen Ende des Aufbaus (1) weiter entfernt angeordnete untere Lenker kürzer als der andere untere Lenker ausgebildet ist.

16. Aufbau (1) nach einem der Ansprüche 10 bis 15, **gekennzeichnet durch** Mittel zum Sichern der Ausgangsstellung (A) des Teils (14) des Endabschnitts (13) der unteren Schiene (9) an dem übrigen Aufbau (1).

17. Aufbau (1) nach einem der Ansprüche 10 bis 16, **gekennzeichnet durch** Mittel zum Sichern der vollständig oder nahezu vollständig gefalteten Stellung der von dem Teil (14) des Endabschnitts (13) der unteren Schiene (9) gehaltenen, faltbaren Seitenwand (5).

18. Aufbau (1) nach einem der Ansprüche 10 bis 17, **dadurch gekennzeichnet, dass** der Teil (14) des Endabschnitts (13) der unteren Schiene (9) über den unteren Lenker derart bewegbar an dem Aufbau (1) angeordnet ist, dass der Teil (14) des Endabschnitts (13) der unteren Schiene (9), vorzugsweise zwangsgesteuert, in eine parallele Stellung (P) zu der weiteren, an das seitliche Ende des Aufbaus (1) angrenzenden Seitenwand (19) des Aufbaus (1) überführbar ist.

19. Aufbau (1) nach einem der vorhergehenden Ansprüche, **dadurch gekennzeichnet, dass** das Dach (3) des Aufbaus (1) wenigstens an einer Seite mittels eines Kraftantriebs heb- und senkbar ist, wobei das obere Ende oder das untere Ende der faltbaren Seitenwand (5) über in vertikaler Richtung teleskopierbare Führungseinheiten (6, 8) bewegbar an der oberen Schiene (7) bzw. der unteren Schiene (9) gelagert ist.

## Claims

1. Assembly (1) for conveying goods, in particular for a heavy-goods vehicle, a trailer, a skip container, a swap body, a semitrailer or the like, having at least one lateral opening for loading (4) and a foldable lateral wall (5), whereby the foldable lateral wall (5) is supported on at least one upper rail (7) located in the upper region of the lateral loading opening (4) and can be moved between a completely unfolded position and a completely folded position,
**characterised in**
**that** at least one part (12) of an end portion of the upper rail (7) adjacent the lateral end (11) of the assembly (1) is connected to the remaining assembly (1) by means of at least one upper guide (16, 17) and is moveable when detached from the remaining assembly (1) in its entirety, whereby the upper guide (16, 17) is swivel-mounted around a first vertical axis (A1) on the assembly (1) and swivel-mounted around a second vertical axis (A2) on the part (12) of the end portion (11) of the upper rail (7) and whereby the length (L) of the part (12) of the end portion (11) of the upper rail (7) corresponds to at least the width (B) of the foldable lateral wall (5) in its completely or nearly completely folded position.

2. Assembly (1) according to claim 1, **characterised in that** the part (12) of the end portion (11) of the upper rail (7) can be moved from an original position (A), in which the part (12) of the end portion (11) of the upper rail (7) is aligned with the remaining upper rail (7) and does not protrude over the lateral end of the assembly (1), into a released position (F), in which the part (12) of the end portion (11) of the upper rail (7) is not situated above the loading opening (4) when detached from the remaining assembly (1) in its entirety.

3. Assembly (1) according to claim 2, **characterised in that** one end of the upper guide (16, 17) is connected to the lateral end of the assembly (1) and the other end of the upper guide (16, 17) is connected to that half of the part (12) of the end portion (11) of the upper rail (7) that faces away from the lateral end of the assembly (1) when the part (12) of the end portion (11) of the upper rail (7) is in its original position (A).

4. Assembly (1) according to claims 1 to 3, **characterised by** at least one further upper guide (16, 17) that is swivel-mounted to the assembly (1) around a third vertical axis (A3) and swivel-mounted to the part (12) of the end portion (11) of the upper rail (7) around a fourth vertical axis (A4).

5. Assembly (1) according to claim 4, **characterised in that** the upper guide (16) located further away from the lateral end of the assembly (1) engages the end region of the part (12) of the end portion (11) of the upper rail (7) that faces away from the lateral end of the assembly (1) when the part (12) of the end portion (11) of the upper rail (7) is in the original position (A), whereby the length of the upper guide (16) that is located further away from the lateral end of the assembly (1) corresponds to the distance in which the flexible end of this upper guide (16) is located on the remaining assembly (1) to the lateral end of the assembly (1).

6. Assembly (1) according to claim 4 or 5, **characterised in that** the two upper guides (16, 17) are designed to be of the same length or that the upper guide (16) located further away from the lateral end of the assembly (1) is designed to be shorter than the other upper guide (17).

7. Assembly (1) according to one of the preceding claims, **characterised by** a means to secure the original position (A) of the part (12) of the end portion (11) of the upper rail (7) on the remaining assembly (1).

8. Assembly (1) according to one of the preceding claims, **characterised by** a means to secure the completely or nearly completely folded position of the foldable lateral wall (5) held by the part (12) of the end portion (11) of the upper rail (7).

9. Assembly (1) according to one of the preceding claims, **characterised in that** the part (12) of the end portion (11) of the upper rail (7) is situated on the assembly (1) and can be moved by means of the upper guide (16, 17) in such a way that the part (12) of the end portion (11) of the upper rail (7) can be transferred, preferably in a force-controlled manner, into a parallel position (P) to the other side wall (19) of the assembly (1) adjacent the lateral end of the assembly (1).

10. Assembly (1) according to one of the preceding claims, **characterised by** a lower rail (9) situated in the lower region of the lateral loading opening (4), on which the foldable lateral wall (5) is supported and can be moved between a completely unfolded position and a completely folded position, whereby at least one part (14) of one of the end portions (13) of the lower rail (9) adjoining the lateral end of the assembly (1) is connected to the remaining assembly (1) by means of at least one lower guide and is moveable when detached from the remaining assembly (1) in its entirety, whereby the lower guide is swivel-mounted around a first vertical axis (A1) on the assembly (1) and being swivel-mounted around a second vertical axis (A2) on the part (14) of the end portion (13) of the lower rail (9) and whereby the length (L) of the part (14) of the end portion (13) of the lower rail (9) corresponds to at least the width (B) of the foldable lateral wall (5) in its completely or nearly completely folded position.

11. Assembly (1) according to claim 10, **characterised in that** the part (14) of the end portion (13) of the lower rail (9) on the assembly (1) can be moved from an original position (A), in which the part (14) of the end portion (13) of the lower rail (9) is aligned with the remaining lower rail (9) and does not protrude over the lateral end of the assembly (1), into a released position (F), in which the part (14) of the end portion (13) of the lower rail (9) is not situated under the loading opening (4) when detached from the remaining assembly (1) in its entirety.

12. Assembly (1) according to claim 11, **characterised in that** one end of the lower guide is connected to the lateral end of the assembly (1) and the other end of the lower guide is connected to that half of the part (14) of the end portion (13) of the lower rail (9) that faces away from the lateral end of the assembly (1) when the part (14) of the end portion (13) of the lower rail (9) is in the original position (A).

13. Assembly (1) according to one of the claims 10 to 12, **characterised by** at least one further lower guide that is swivel-mounted to the assembly (1) around a third vertical axis (A3) and swivel-mounted to the part (14) of the end portion (13) of the lower rail (9) around a fourth vertical axis (A4).

14. Assembly (1) according to claim 11, **characterised in that** the lower guide that is located further away from the lateral end of the assembly (1) engages the end of the part (14) of the end portion (13) of the lower rail (9) that faces away from the lateral end of the assembly (1) when the part (14) of the end portion (13) of the lower rail (9) is in its original position (A), whereby the length of the lower guide that is located further away from the lateral end of the assembly (1) corresponds to the distance in which the flexible end of this lower guide is located on the remaining assembly to the lateral end of the assembly (1).

15. Assembly (1) according to claim 13 or 14, **characterised in that** the two lower guides are designed to be of the same length or that the lower guide located further away from the lateral end of the assembly (1) is designed to be shorter than the other lower guide.

16. Assembly (1) according to claims 10 to 15, **characterised by** a means to secure the original position (A) of the part (14) of the end portion (13) of the lower rail (9) on the remaining assembly (1).

17. Assembly (1) according to one of the claims 10 to 16, **characterised by** a means to secure the completely or nearly completely folded position of the foldable lateral wall (5) held by the part (14) of the end portion (13) of the lower rail (9).

18. Assembly (1) according to one of the claims 10 to 17, **characterised in that** the part (14) of the end portion (13) of the lower rail (9) is situated on the assembly and can be moved (1) by means of the lower guide in such a way that the part (14) of the end portion (13) of the lower rail (9) can be transferred, preferably in a force-controlled manner, into a parallel position (P) to the other side wall (19) of the assembly adjacent the lateral end of the assembly (1).

19. Assembly (1) according to one of the preceding claims, **characterised in that** the roof (3) of the assembly (1) can be raised and lowered at least at one side using a power drive, whereby the upper end or the lower end of the foldable lateral wall (5) is supported at the upper rail (7) or the lower rail (9) and can be moved using guide units (6, 8) telescoping in a vertical direction.

## Revendications

1. Structure (1) pour le transport de biens, en particulier pour un camion, une remorque, un conteneur mobile, une caisse mobile, une semi-remorque ou similaire, comprenant au moins une ouverture de chargement latérale (4) et une paroi latérale (5) pliable, où la paroi latérale (5) pliable est disposée de façon mobile entre une position entièrement dépliée et une position entièrement pliée au moins sur un rail supérieur (7) installé dans la zone supérieure de l'ouverture de chargement latérale (4),
**caractérisée en ce**
**qu'**au moins une partie (12) d'une section terminale (11) du rail supérieur (7) adjacente à une extrémité latérale de la structure (1) est connectée par au moins un bras de suspension supérieur (16, 17) au reste de la structure (1) et est deplaçable de manière indépendante dans son ensemble du reste de la structure (1), où le bras de suspension supérieur (16, 17) placé sur la structure (1) de manière à pouvoir pivoter autour d'un premier axe vertical (A1) et sur la partie (12) de la section terminale (11) du rail supérieur (7) de manière à pouvoir pivoter autour d'un second axe verticale (A2) et où la longueur (L) de la partie (12) de la section terminale (11) du rail supérieur (7) correspond à la largeur (B) de la paroi latérale (5) pliable dans sa position entièrement ou presque entièrement pliée.

2. Structure (1) selon la revendication 1, **caractérisée en ce que** la partie (12) de la section terminale (11) du rail supérieur (7) est deplaçable d'une position de départ (A), dans laquelle la partie (12) de la section terminale (11) du rail supérieur (7) est placée sur la structure (1) de manière alignée avec le reste du rail supérieur (7) et de manière à ne pas dépasser l'extrémité latérale de la structure (1), à une position de libération (F), dans laquelle la partie (12) de la section terminale (11) du rail supérieur (7) est placée pas au dessus de l'ouverture de chargement (4) de manière indépendante dans son ensemble du reste de la structure (1).

3. Structure (1) selon la revendication 2, **caractérisée en ce qu'**une extrémité du bras de suspension supérieur (16, 17) est connectée avec l'extrémité latérale de la structure (1) et l'autre extrémité du bras de suspension supérieur (16, 17) avec la moitié de la partie (12) de la section terminale (11) du rail supérieur (7) opposée à l'extrémité latérale de la structure (1) lorsque la partie (12) de la section terminale (11) du rail supérieur (7) se trouve dans la position de départ (A).

4. Structure (1) selon la revendication 1 à 3, **caractérisée par** au moins un autre bras de suspension supérieur (16, 17), qui est placé sur la structure (1) de manière à pouvoir pivoter autour d'un troisième axe vertical (A3) et sur la partie (12) de la section terminale (11) du rail supérieur (7) de manière à pouvoir pivoter autour d'un quatrième axe verticale (A4).

5. Structure (1) selon la revendication 4, **caractérisée en ce que** le bras de suspension supérieur (16) placé plus loin de l'extrémité latérale de la structure est en prise avec la moitié de la partie (12) de la section terminale (11) du rail supérieur (7) opposée à l'extrémité latérale de la structure (1) lorsque la partie (12) de la section terminale (11) du rail supérieur (7) se trouve dans la position de départ (A), où la longueur du bras de suspension supérieur (16) placé plus loin de l'extrémité latérale de la structure (1) correspond à la distance à laquelle l'extrémité de ce bras de suspension placée de manière articulée sur le reste de la structure est placée par rapport à l'extrémité latérale de la structure (1).

6. Structure (1) selon la revendication 4 ou 5, **caractérisée en ce que** le deux bras de suspension supérieurs (16, 17) sont formés avec la même longueur ou que le bras de suspension supérieur (16) placé plus loin de l'extrémité latérale de la structure (1) est formé plus court que l'autre bras de suspension supérieur (17).

7. Structure (1) selon l'une quelconque des revendications précédentes, **caractérisée par** des moyens pour fixer la position de départ (A) de la partie (12) de la section terminale (11) du rail supérieur (7) sur le reste de la structure (1).

8. Structure (1) selon l'une quelconque des revendications précédentes, **caractérisée par** des moyens pour fixer la position entièrement ou presque entièrement pliée de la paroi latérale (5) pliable maintenue par la partie (12) de la section terminale (11) du rail supérieur (7).

9. Structure (1) selon l'une quelconque des revendications précédentes, **caractérisée en ce que** la partie (12) de la section terminale (11) du rail supérieur (7) est placée sur la structure (1) à travers le bras de suspension supérieur (16, 17) de manière tellement deplaçable que la partie (12) de la section terminale (11) du rail supérieur (7) puisse être transférée, de préférence par commande forcée, dans une position parallèle (P) à l'autre paroi latérale (19) adjacente à l'extrémité latérale de la structure (1).

10. Structure (1) selon l'une quelconque des revendications précédentes, **caractérisée par** un rail inférieur (9) placé dans la zone inférieure de la porte de chargement (4) latérale, sur lequel la paroi latérale (5) pliable est placée de manière deplaçable entre une position entièrement dépliée et une position entièrement pliée, où au moins une partie (14) d'une section terminale adjacente à l'extrémité latérale de la structure (1) du rail inférieur (9) est connectée avec le reste de la structure par au moins un des bras de suspension inférieurs et est deplaçable de manière indépendante dans son ensemble du reste de la structure (1), où le bras de suspension inférieur est placé sur la structure (1) de manière à pouvoir pivoter autour d'un premier axe vertical (A1) et sur la partie (14) de la section terminale (11) du rail supérieur (7) de manière à pouvoir pivoter autour d'un second axe verticale (A2) et où la longueur (L) de la partie (14) de la section terminale (13) du rail inférieur (9) correspond à la largeur (B) de la paroi latérale (5) pliable dans sa position entièrement ou presque entièrement pliée.

11. Structure (1) selon la revendication 10, **caractérisée en ce que** la partie (14) de la section terminale (13) du rail inférieur (9) est deplaçable d'une position de départ (A), dans laquelle la partie (14) de la section terminale (13) du rail inférieur (9) est placée sur la structure (1) de manière alignée avec le reste du rail inférieur (9) et de manière à ne pas dépasser l'extrémité latérale de la structure (1), à une position de libération (F), dans laquelle la partie (14) de la section terminale (13) du rail inférieur (9) est placée pas au dessous de l'ouverture de chargement (4) de manière indépendante dans son ensemble du reste de la structure (1).

12. Structure (1) selon la revendication 11, **caractérisée en ce qu'**une extrémité du bras de suspension inférieur est connectée avec l'extrémité latérale de la structure (1) et l'autre extrémité du bras de suspension inférieur avec la moitié de la partie (14) de la section terminale (13) du rail inférieur (9) opposée à l'extrémité latérale de la structure (1) lorsque la partie (14) de la section terminale (13) du rail inférieur (9) se trouve dans la position de départ (A).

13. Structure (1) selon l'une quelconque des revendications 10 à 12, **caractérisée par** au moins un autre bras de suspension inférieur, qui est placé sur la structure (1) de manière à pouvoir pivoter autour du troisième axe vertical (A3) et sur la partie (14) de la section terminale (13) du rail inférieur (9) de manière à pouvoir pivoter autour du quatrième axe verticale (A4).

14. Structure (1) selon la revendication 11, **caractérisée en ce que** le bras de suspension inférieur placé plus loin de l'extrémité latérale de la structure (1) est en prise avec la moitié de la partie (14) de la section terminale (13) du rail inférieur (9) opposée à l'extrémité latérale de la structure (1) lorsque la partie (14) de la section terminale (13) du rail inférieur (9) se trouve dans la position de départ (A), où la longueur du bras de suspension inférieur placé plus loin de l'extrémité latérale de la structure (1) correspond à la distance à laquelle l'extrémité de ce bras de suspension placée de manière articulée sur le reste de la structure est placée par rapport à l'extrémité latérale de la structure (1).

15. Structure (1) selon la revendication 13 ou 14, **caractérisée en ce que** le deux bras de suspension inférieurs sont formés avec la même longueur ou que le bras de suspension inférieur placé plus loin de l'extrémité latérale de la structure (1) est formé plus court que l'autre bras de suspension inférieur.

16. Structure (1) selon l'une quelconque des revendications 10 à 15, **caractérisée par** des moyens pour fixer la position de départ (A) de la partie (14) de la section terminale (13) du rail inférieur (9) sur le reste de la structure (1).

17. Structure (1) selon l'une quelconque des revendications 10 à 16, **caractérisée par** des moyens pour fixer la position entièrement ou presque entièrement pliée de la paroi latérale (5) pliable maintenue par la partie (14) de la section terminale (13) du rail inférieur (9).

18. Structure (1) selon l'une quelconque des revendications 10 à 17, **caractérisée en ce que** la partie (14) de la section terminale (13) du rail inférieur (9) est placée sur la structure (1) à travers le bras de suspension inférieur de manière tellement déplaçable que la partie (14) de la section terminale (13) du rail inférieur (9) puisse être transférée, de préférence par commande forcée, dans une position parallèle (P) à l'autre paroi latérale (19) adjacente à l'extrémité latérale de la structure (1).

19. Structure (1) selon l'une quelconque des revendications précédentes, **caractérisée en ce que** le toit (3) de la structure (1) peut être au moins d'un côté soulevé ou abaissé au moyen d'un moteur, où l'extrémité supérieure ou l'extrémité inférieure de la paroi latérale (5) pliable est installée de façon mobile au moyen d'unités de guidage (6, 8) télescopiques verticalement sur le rail supérieur (7) ou sur le rail inférieur (9).
